# EUROPEAN PATENT APPLICATION

(11) **EP 2 991 414 A1**
(43) Date of publication of application: **02.03.2016**
(21) Application number: 14797743.3
(22) Date of filing: 14.05.2014
(51) Int. Cl.: H04W 52/24

(54) **MICROCELL POWER CONTROL METHOD AND BASE STATION**

(30) Priority: 17.05.2013 CN 201310185899
(71) Applicant: ZTE Corporation, Shenzhen, Guangdong 518057 (CN)
(72) Inventor: ZHAO, Yajun, Shenzhen Guangdong 518057 (CN); XU, Hanqing, Shenzhen Guangdong 518057 (CN); MO, Linmei, Shenzhen Guangdong 518057 (CN)
(74) Representative: Price, Nigel John King
(86) International application number: PCT/CN2014/077511
(87) International publication number: WO 2014/183648

(57) **Abstract**

A method and a base station for power control of a microcell are disclosed. The method includes that when a state change of a microcell is detected, transmitting power lower than a rated value in a normal active state is configured for the microcell.

## Description

### TECHNICAL FIELD

The disclosure relates to the field of communications, and in particular to a method a base station for power control of a microcell.

### BACKGROUND

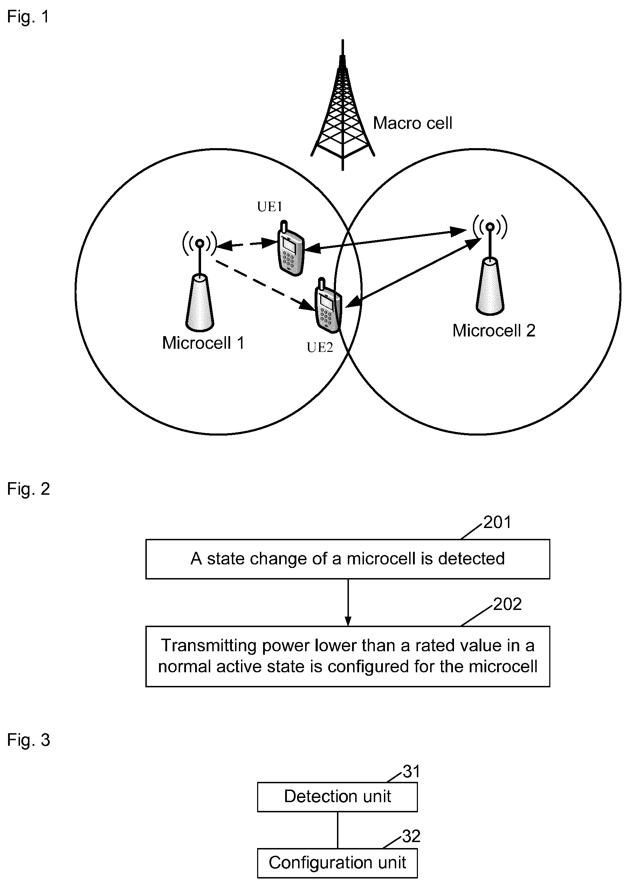

Along with wide popularization of Personal Computer (PC) services and smart terminals, requirements of people on wireless communication experiences, particularly on communication rates, increase. In a Long Term Evolution (LTE) standard and subsequent standard evolution, a networking architecture of a Heterogeneous Network (HetNet) is adopted to improve user perception and system throughput and particularly to improve throughput of a hot spot, that is, microcells (Small cells) are deployed within a signal coverage of a macro cell to improve quality of service and throughput of the hot spot. Fig. 1 is a typical microcell scenario, wherein microcell 1 and microcell 2 are at the same frequency, and the two microcells and a macro cell which covers the signal coverage of the two microcells are at different frequencies or the same frequency.

Increasing the number of microcells in a hot spot is an effective mechanism for improving network capacity and reducing coverage holes, but also brings many problems, such as interference between the microcells and problems in handover and energy consumption. A microcell may usually generate burst interference to peripheral co-frequency adjacent cells in an initial activation stage of the microcell, and burst interference may affect performance of the adjacent cells.

### SUMMARY

In view of this, a main purpose of the disclosure is to provide a method and a base station for power control of a microcell, so as to reduce interference from a microcell to an adjacent cell in an initial activation stage of the microcell.

In order to achieve the purpose, the technical solutions of the embodiment of the disclosure are implemented as follows.

A method for power control of a microcell is provided, which includes:
when a state change of a microcell is detected, transmitting power lower than a rated value in a normal active state is configured for the microcell.

In the solution, the state change of the microcell may be activation of the microcell.

In the solution, a manner for configuring the transmitting power lower than the rated value in the normal active state may be that:
the transmitting power is fixedly configured as a specific power value, the specific power value being lower than rated maximum transmitting power;
or, path loss between User Equipment (UE) and the microcell is estimated based on received discovery signal (DS) strength measured and fed back by the UE and according to DS's transmitting power, and the transmitting power is configured on the basis of the path loss;
or, path loss between the UE and the microcell is estimated based on received DS strength measured and fed back by the UE and according to DS's transmitting power, a power threshold value P_thre is set, the transmitting power is configured on the basis of the path loss of the UE when the path loss of the UE does not exceed the P_thre, otherwise the transmitting power is configured according to the P_thre;
or, when there are multiple UEs measuring and feeding back received DS strength, path loss of each UE is calculated, a power threshold value P_thre is set, the transmitting power is configured according to path loss of UE having maximum fading when the path loss of the each UE does not exceed the P_thre, otherwise the transmitting power is configured according to the P_thre.

In the solution, the method may further include: power of a Reference Signal (RS) and/or a downlink channel is proportionally regulated on the basis of regulation of maximum transmitting power configured for the microcell.

After the microcell is activated, the transmitting power may be gradually increased until the transmitting power is increased to the rated value in the normal active state.

In the solution, the step that the transmitting power is increased may include that:
the transmitting power is periodically increased according to a predetermined step size;
or, a macro cell increases the transmitting power of the microcell;
or, the microcell negotiates with a peripheral adjacent cell to increase the transmitting power;
or, the microcell regulates the power into normal transmitting power when UE is handed over to the microcell;
or, a preset centralized control unit increases the transmitting power of the microcell;
or, a Self-Organized Network (SON) or an Operational Maintenance (OM) entity increases the transmitting power of the microcell.

In the solution, the method may further include that:
multiple initial transmitting power modes are preset; when the initial transmitting power mode is configured as a normal mode, transmitting power in the normal active state is directly configured for the microcell after the microcell is activated; and when the initial transmitting power mode is configured as a transmitting power gradual regulation mode, the transmitting power lower than the rated value in the normal active state is configured for the microcell when the microcell is initially activated.

In the solution, a manner for configuring the initial transmitting power mode may be that:
a macro cell configures the initial transmitting power mode of the microcell;
or, the microcell negotiates with the peripheral adjacent cell to configure the initial transmitting power mode of the microcell;
or, a preset centralized control unit configures the initial transmitting power mode of the microcell;
or, a SON or an OM entity configures the initial transmitting power mode of the microcell.

In the solution, the state change of the microcell may be deactivation of the microcell.

The step that the transmitting power lower than the rated value in the normal active state is configured for the microcell may include that the transmitting power of the microcell is gradually reduced.

In the solution, the method may further include that power of an RS and/or a downlink channel is configured on the basis of maximum transmitting power configured for the microcell;
the RS includes a Cell Reference Signal (CRS), a Channel State Information Reference Signal (CSI-RS), a Primary Synchronization Signal (PSS), a Secondary Synchronization Signal (SSS) and a Positioning Reference Signal (PRS); and the downlink channel includes a Physical Broadcast Channel (PBCH), a Physical Downlink Shared Channel (PDSCH), a Physical Downlink Control Channel (PDCCH) and an Enhanced Physical Downlink Control Channel (ePDCCH).

In the solution, the method may further include that transmitting power of an RS of a base station is notified to the UE; and/or,
a ratio of transmitting power of the RS of the base station to transmitting power of a data channel is notified to the UE.

In the solution, the notifying may include that the base station sends a corresponding notification to the UE every time when the base station regulates power;
or, the base station notifies the UE of a power change rule when sending a corresponding notification to the UE, the power change rule including information about a period and a step size.

An embodiment of the disclosure provides a base station, which includes:
a detection unit, configured to notify a configuration unit to perform configuration when detecting a state change of a microcell; and
the configuration unit, configured to configure transmitting power lower than a rated value in a normal active state for the microcell when receiving the to perform from the detection unit.

In the solution, the state change of the microcell may be activation of the microcell.

In the solution, the configuration unit may be configured to fixedly configure the transmitting power as a specific power value, the specific power value being lower than rated maximum transmitting power;
or, estimate path loss between UE and the microcell based on received discovery signal (DS) strength measured and fed back by the UE and according to DS's transmitting power, and configure the transmitting power on the basis of the path loss;
or, estimate path loss between the UE and the microcell based on received DS strength measured and fed back by the UE and according to DS's transmitting power, set a power threshold value P_thre, configure the transmitting power on the basis of the path loss of the UE when the path loss of the UE does not exceed the P_thre, otherwise configure the transmitting power according to the P_thre;
or, when there are multiple UEs measuring and feeding back received DS strength, calculate path loss of each UE, set the power threshold value P_thre, configure the transmitting power according to path loss of UE having maximum fading when the path loss of the each UE does not exceed the P_thre, otherwise configure the transmitting power according to the P_thre.

In the solution, the configuration unit may be configured to proportionally regulate power of an RS and/or a downlink channel on the basis of regulation of maximum transmitting power configured for the microcell.

In the solution, the configuration unit may be configured to, after the microcell is activated, gradually increase the transmitting power until the transmitting power is increased to the rated value in the normal active state.

In the solution, the configuration unit may be configured to periodically increase the transmitting power according to a predetermined step size;
or, control a macro cell to increase the transmitting power of the microcell;
or, control the microcell to negotiate with a peripheral adjacent cell to increase the transmitting power;
or, control the microcell to regulate the power into normal transmitting power when UE is handed over to the microcell;
or, control a preset centralized control unit to increase the transmitting power of the microcell;
or, control an SON or an OM entity to increase the transmitting power of the microcell.

In the solution, the configuration unit may be configured to preset multiple initial transmitting power modes, and when the initial transmitting power mode is configured as a normal mode, directly configure the microcell with transmitting power in the normal active state after the microcell is activated, and when the initial transmitting power mode is configured as a transmitting power gradual regulation mode, configure the transmitting power lower than the rated value in the normal active state for the microcell when the microcell is initially activated.

In the solution, the configuration unit may be configured to control a macro cell to configure the initial transmitting power mode of the microcell;
or, control the microcell to negotiate with a peripheral adjacent cell to configure the initial transmitting power mode of the microcell;
or, control a preset centralized control unit to configure the initial transmitting power mode of the microcell;
or, control a SON or an OM entity to configure the initial transmitting power mode of the microcell.

In the solution, the state change of the microcell may be deactivation of the microcell.

When configuring the transmitting power lower than the rated value in the normal active state for the microcell, the device is configured to gradually reduce the transmitting power of the microcell.

In the solution, the configuration unit may be configured to configure power of an RS and/or a downlink channel on the basis of the maximum transmitting power configured for the microcell;
the RS includes a CRS, a CSI-RS, a PSS, an SSS and a PRS; and the downlink channel includes a PBCH, a PDSCH, a PDCCH and an ePDCCH.

In the solution, the configuration unit may be configured to notify UE of transmitting power of an RS of the base station; and/or,
notify the UE of a ratio of transmitting power of the RS of the base station to transmitting power of a data channel.

In the solution, the configuration unit may be configured to send a corresponding notification to the UE every time when the power is regulated;
or, configured to further notify the UE of a power change rule when sending a corresponding notification to the UE, the power change rule comprising information about a period and a step size.

By the technology for power control of a microcell according to the embodiments of the disclosure, transmitting power lower than a rated value in a normal active state is configured for the microcell when a state change of the microcell is detected, so that interference from the microcell to an adjacent cell in an initial activation stage of the microcell may be effectively reduced, and influence on performance of the adjacent cell may be avoided as much as possible.

### BRIEF DESCRIPTION OF THE DRAWINGS

Fig. 1 is structure diagram of a microcell network according to an existing technology;
Fig. 2 is a flowchart of a method for power control of a microcell according to an embodiment of the disclosure; and
Fig. 3 is a structure diagram of a base station according to an embodiment of the disclosure.

### DETAILED DESCRIPTION

The disclosure is further described below with reference to the drawings and specific embodiments in detail.

In short, operations shown in Fig. 2 may be executed according to a method for power control of a microcell provided by the embodiment of the disclosure, including:
Step 201: a state change of a microcell is detected; and
Step 202: transmitting power lower than a rated value in a normal active state is configured for the microcell.

The state change of the microcell may be activation of the microcell, or may be deactivation of the microcell, and the like.

When the microcell is initially activated, the transmitting power lower than the rated value in the normal active state may be configured for the microcell by a microcell control entity such as a base station. Due to configuration of the lower transmitting power, interference from the newly-activated microcell to an adjacent cell is reduced. In addition, UE on an edge of the newly-activated microcell may be started for measurement, and a measurement result may be adopted for assisting in positioning of the UE as well as configuration and coordination of interference.

After the microcell is activated, the transmitting power of the newly-activated microcell may further be gradually increased if a preset requirement, a communication requirement or the like is made.

Corresponding to the activation of the microcell, when the microcell is deactivated, the transmitting power of the current microcell may be gradually reduced to narrow a signal coverage, and meanwhile, the served UE is handed over to another microcell, for example, an adjacent cell. When the transmitting power of the current microcell is reduced, transmitting power of other microcell (for example, an adjacent cell) may be increased to widen a signal coverage.

During a practical application, it is assumed that Cell1 and Cell2 are arranged, Cell1 is in a dormant state, and Cell2 is in an active state. UE1 is close to Cell1, and UE2 is close to Cell2. UE1 and UE2 are both served by Cell2.

Embodiment 1: a power configuration solution during activation of a microcell Cell1 is activated, and initial maximum downlink transmitting power Pinit of Cell1 is configured, Pinit being lower than rated maximum transmitting power Pmax of Cell1. Cell1 configures transmitting power of a downlink signal on the basis of Pinit.

Pinit may be configured by a method as follows:
Pinit is fixedly configured into a certain power value, the power value being lower than the rated maximum transmitting power of Cell1;
or, path loss (PL) between UE1 and Cell1 is estimated based on received discovery signal (DS) strength measured and fed back by the UE1 and according to DS's transmitting power, and proper Pinit is configured on the basis of PL and other information. For example, Pinit= α *PL+G, where α is greater than or equal to 0, α is a weighting coefficient obtained on the basis of measurement; G is an initial amount in consideration of factors such as interference of an adjacent cell;
or, when there are multiple UEs measuring and feeding back received DS strength, path loss of each UE is calculated, a threshold value P_thre is set, Pinit is configured according to PL of UE having maximum fading when the PL of the each UE does not exceed P_thre, otherwise Pinit is configured according to P_thre, wherein the interference influence on an adjacent cell and a gain from the activated microcell are both considered when P_thre is set.

After Cell1 is activated, the maximum downlink transmitting power may be gradually increased until the maximum downlink transmitting power is increased to the rated value in the normal active state. An implementation manner is specifically as follows:
the transmitting power is periodically increased according to a predetermined step size. For example, a period is set to be T, the power regulation step is ΔP, and then Pmax(n)=Pinit+n* ΔP, where Pmax(n) is a maximum downlink power configuration in the nth period, Pmax(n) is lower than Pmax, and n is greater than or equal to 1;
or, a macro cell increases the transmitting power of Cell1;
or, Cell1 negotiates with the peripheral adjacent cell to increase the transmitting power;
or, Cell1 regulates the power into normal transmitting power when the UE is handed over to Cell1.
while the transmitting power of Cell1 is increased, the adjacent cell such as Cell2 may synchronously coordinate to reduce transmitting power and further narrow the signal coverage.

When Cell1 regulates the transmitting power, information related to power regulation may be notified to the served UE.

Embodiment 2: a power configuration solution during deactivation of the microcell The transmitting power of the microcell is gradually reduced to narrow the signal coverage, and meanwhile, the served UE is handed over to the other microcell, for example, an adjacent cell. The adjacent cell may synchronously increase the transmitting power to widen the coverage.

Specifically, Cell1 gradually reduces the transmitting power to narrow the coverage after receiving a deactivation instruction. A specific method may be as follows:
the transmitting power is periodically reduced according to the predetermined step size to finally deactivate the microcell. For example, the period is set to be T, the power regulation step is ΔP, and then Pmax(n)=P-n* ΔP, where Pmax(n) is the maximum downlink power configuration in the nth period, Pmax(n) is lower than Pmax, and n is greater than or equal to 1;
the transmitting power is periodically reduced according to the predetermined step size, and the microcell may be directly deactivated when Pmax(i) is smaller than or equal to P_thre;
or, the macro cell reduces the transmitting power of the microcell, and deactivates the microcell;
or, the microcell negotiates with the peripheral adjacent cell to reduce the transmitting power and deactivate the microcell;
or, the microcell is deactivated when all the UEs in the microcell are handed over to the other adjacent cell;
or, a preset centralized control unit reduces the transmitting power of the microcell, and deactivates the microcell;
or, an SON or an OM entity reduces the transmitting power of the microcell, and deactivates the microcell.

While the transmitting power of Cell1 is reduced, the adjacent cell such as Cell2 may synchronously coordinate to increase the transmitting power to widen its signal coverage.

When Cell1 regulates the transmitting power, information related to power regulation may be notified to the served UE.

Along with reduction of the transmitting power, the UE served by Cell1 may be gradually handed over to the other microcell, for example, an adjacent cell.

In a deactivation process, if a new requirement on Cell1 is made, Cell1 ends the deactivation process, and gradually increases the transmitting power to widen its signal coverage.

Finally, Cell1 enters the dormant state. The specific solutions may be as follows:
after the UE served by Cell1 is completely handed over to the other microcell, Cell1 directly enters the dormant state; or,
Cell1 gradually reduces the transmitting power, and after the transmitting power is reduced to the preset threshold value and the UE served by Cell1 has been handed over to the other microcell, Cell1 enters the dormant state.

From the above, it is clear that the transmitting power lower than the rated value in the normal active state may be configured for the microcell when the state change of the microcell is detected.

The state change of the microcell is initial activation of the microcell.

A manner for configuring the transmitting power is implemented as follows: the transmitting power is fixedly configured as a specific power value, the power value being lower than rated maximum transmitting power;
or, path loss between the UE and the microcell is estimated according to based on received discovery signal (DS) strength measured and fed back by the UE and according to DS's transmitting power, and the transmitting power is configured on the basis of the path loss;
or, the path loss between the UE and the microcell is estimated based on received DS strength measured and fed back by the UE and according to DS's transmitting power, the power threshold value P_thre is set, the transmitting power is configured on the basis of the path loss of the UE if the path loss of the UE does not exceed P_thre, otherwise the transmitting power is configured according to P_thre;
or, when there are multiple UEs measuring and feeding back Received DS strength, path loss of each UE is calculated, the power threshold value P_thre is set, the transmitting power is configured according to path loss of UE having maximum fading when the path loss of the UE does not exceed P_thre, otherwise the transmitting power is configured according to P_thre.

Power of an RS and/or a downlink channel may also be proportionally regulated on the basis of regulation of the maximum transmitting power configured for the microcell.

After the microcell is activated, the transmitting power is gradually increased until the transmitting power is increased to the rated value in the normal active state.

A manner for increasing the transmitting power is implemented as follows:
the transmitting power is periodically increased according to the predetermined step size;
or, the macro cell increases the transmitting power of the microcell;
or, the microcell negotiates with the peripheral adjacent cell to increase the transmitting power;
or, the microcell regulates the power into the normal transmitting power when the UE is handed over to the microcell;
or, the preset centralized control unit increases the transmitting power of the microcell;
or, the SON or the OM entity increases the transmitting power of the microcell.

Multiple initial transmitting power modes may also be preset, and when the initial transmitting power mode is configured as a normal mode, transmitting power in the normal active state is directly configured for the microcell after the microcell is activated; and when the initial transmitting power mode is configured as a transmitting power gradual regulation mode, the transmitting power lower than the rated value in the normal active state is configured for the microcell when the microcell is initially activated.

A manner for configuring the initial transmitting power mode is implemented as follows:
the macro cell configures the initial transmitting power mode of the microcell;
or, the microcell negotiates with the peripheral adjacent cell to configure the initial transmitting power mode of the microcell;
or, the preset centralized control unit configures the initial transmitting power mode of the microcell;
or, the SON or the OM entity configures the initial transmitting power mode of the microcell.

The state change of the microcell is deactivation of the microcell.

The step that the transmitting power lower than the rated value in the normal active state is configured for the microcell includes that the transmitting power of the microcell is gradually reduced.

The power of the RS and/or the downlink channel may also be configured on the basis of the maximum transmitting power configured for the microcell;
the RS may include a CRS, a CSI-RS, a PSS, an SSS and a PRS; and the downlink channel includes a PBCH, a PDSCH, a PDCCH and an ePDCCH.

Transmitting power of an RS of the base station may also be notified to the UE; and/or,
a ratio of transmitting power of the RS of the base station to transmitting power of a data channel is notified to the UE.

The notification is implemented as follows:
the base station sends a corresponding notification to UE every time when the base station regulates power;
or, the base station notifies a power change rule to the UE when sending a corresponding notification to the UE, the power change rule including information about a period and a step size.

On the basis of the abovementioned operation, a device for power control of a microcell according to an embodiment of the disclosure may be a base station, and as shown in Fig. 3, the base station includes:
a detection unit 31, configured to notify a configuration unit 32 to perform configuration when detecting a state change of a microcell; and
the configuration unit 32, configured to configure transmitting power lower than a rated value in a normal active state for the microcell when receiving the notification from the detection unit.

The state change of the microcell is activation of the microcell.

The configuration unit 32 is configured to fixedly configure the transmitting power into a specific power value, the power value being lower than rated maximum transmitting power;
or, estimate path loss between UE and the microcell based on received discovery signal (DS) strength measured and fed back by the UE and according to DS's transmitting power, and configure the transmitting power on the basis of the path loss;
or, estimate the path loss between the UE and the microcell based on received DS strength measured and fed back by the UE and according to DS's transmitting power, set a power threshold value P_thre, configure the transmitting power on the basis of the path loss of the UE if the path loss of the UE does not exceed P_thre, otherwise configure the transmitting power according to P_thre;
or, when there are multiple UEs measuring and feeding back Received DS strength, calculate path loss of each UE, set the power threshold value P_thre, configure the transmitting power according to path loss of UE having maximum fading when the path loss of the each UE does not exceed P_thre, otherwise configure the transmitting power according to P_thre.

The configuration unit 32 is configured to proportionally regulate power of an RS and/or a downlink channel on the basis of regulation of the maximum transmitting power configured for the microcell.

The configuration unit 32 is configured to, after the microcell is activated, gradually increase the transmitting power until the transmitting power is increased to the rated value in the normal active state.

The configuration unit 32 is configured to periodically increase the transmitting power according to a predetermined step size;
or, control a macro cell to increase the transmitting power of the microcell;
or, control the microcell to negotiate with a peripheral adjacent cell to increase the transmitting power;
or, control the microcell to regulate the power into normal transmitting power when UE is handed over to the microcell;
or, control a preset centralized control unit to increase the transmitting power of the microcell;
or, control an SON or an OM entity to increase the transmitting power of the microcell.

The configuration unit 32 is configured to preset multiple initial transmitting power modes, and when the initial transmitting power mode is configured as a normal mode, directly configure the microcell with transmitting power in the normal active state after the microcell is activated, and when the initial transmitting power mode is configured as a transmitting power gradual regulation mode, configure the transmitting power lower than the rated value in the normal active state for the microcell when the microcell is initially activated.

The configuration unit 32 is configured to control the macro cell to configure the initial transmitting power mode of the microcell;
or, control the microcell to negotiate with the peripheral adjacent cell to configure the initial transmitting power mode of the microcell;
or, control the preset centralized control unit to configure the initial transmitting power mode of the microcell;
or, control the SON or the OM entity to configure the initial transmitting power mode of the microcell.

The state change of the microcell is deactivation of the microcell.

The configuration unit 32 is configured to, when configuring the transmitting power lower than the rated value in the normal active state for the microcell, gradually reduce the transmitting power of the microcell.

The configuration unit 32 is configured to configure the power of the RS and/or the downlink channel on the basis of the maximum transmitting power configured for the microcell;
the RS includes a CRS, a CSI-RS, a PSS, an SSS and a PRS; and the downlink channel includes a PBCH, a PDSCH, a PDCCH and an ePDCCH.

The configuration unit 32 is configured to notify transmitting power of an RS of the base station to the UE; and/or,
notify the UE of a ratio of transmitting power of the RS of the base station to transmitting power of a data channel.

The configuration unit 32 is configured to send a corresponding notification to the UE every time when the power is regulated;
or, configured to further notify the UE of a power change rule when sending a corresponding notification to the UE, the power change rule including information about a period and a step size.

Each of the detection unit and the configuration unit may be implemented by a Digital Signal Processor (DSP), Field Programmable Gate Array (FPGA), hardware such as a baseband chip in another form and/or software in a base station.

From the above, in both the method and the device capable of implementing the method according to the power control technology for a microcell according to the embodiments of the disclosure, the transmitting power lower than the rated value in the normal active state is configured for a microcell when a state change of the microcell is detected, so that interference of the microcell to an adjacent cell in an initial activation stage of the microcell may be effectively reduced, and influence on performance of the adjacent cell may be avoided as much as possible.

The above are only the preferred embodiments of the disclosure and not intended to limit the scope of protection of the disclosure.

## Claims

1. A method for power control of a microcell, comprising:
when a state change of a microcell is detected,
configuring transmitting power lower than a rated value in a normal active state for the microcell.

2. The method according to claim 1, wherein the state change of the microcell is activation of the microcell.

3. The method according to claim 2, wherein a manner for configuring the transmitting power lower than the rated value in the normal active state is:
fixedly configuring the transmitting power as a specific power value, the specific power value being lower than rated maximum transmitting power;
or, estimating path loss between User Equipment (UE) and the microcell based on received discovery signal (DS) strength measured and fed back by the UE and according to DS's transmitting power, and configuring the transmitting power on the basis of the path loss;
or, estimating path loss between UE and the microcell based on received DS strength measured and fed back by the UE and according to DS's transmitting power, setting a power threshold value P_thre, configuring the transmitting power on the basis of the path loss of the UE when the path loss of the UE does not exceed the P_thre, otherwise configuring the transmitting power according to the P_thre;
or, when there are multiple UEs measuring and feeding back received DS strength, calculating path loss of each UE, setting a power threshold value P_thre, configuring the transmitting power according to path loss of UE having maximum fading when the path loss of the each UE does not exceed the P_thre, otherwise configuring the transmitting power according to the P_thre.

4. The method according to claim 2 or 3, further comprising: proportionally regulating power of a Reference Signal (RS) and/or a downlink channel on the basis of regulation of maximum transmitting power configured for the microcell.

5. The method according to claim 2 or 3, further comprising: after the microcell is activated, gradually increasing the transmitting power until the transmitting power is increased to the rated value in the normal active state.

6. The method according to claim 5, wherein increasing the transmitting power comprises:
periodically increasing the transmitting power according to a predetermined step size;
or, increasing, by a macro cell, the transmitting power of the microcell;
or, making the microcell negotiate with a peripheral adjacent cell to increase the transmitting power;
or, regulating, by the microcell, the transmitting power into normal transmitting power when UE is handed over to the microcell;
or, increasing, by a preset centralized control unit, the transmitting power of the microcell;
or, increasing, by a Self-Organized Network (SON) or an Operational Maintenance (OM) entity, the transmitting power of the microcell.

7. The method according to claim 2, further comprising:
presetting multiple initial transmitting power modes;
when the initial transmitting power mode is configured as a normal mode, directly configuring the microcell with transmitting power in the normal active state after the microcell is activated;
when the initial transmitting power mode is configured as a transmitting power gradual regulation mode, configuring the transmitting power lower than the rated value in the normal active state for the microcell when the microcell is initially activated.

8. The method according to claim 7, wherein a manner for configuring the initial transmitting power mode is:
configuring, by a macro cell, the initial transmitting power mode of the microcell;
or, making the microcell negotiate with a peripheral adjacent cell to configure the initial transmitting power mode of the microcell;
or, configuring, by a preset centralized control unit, the initial transmitting power mode of the microcell;
or, configuring, by a SON or an OM entity, the initial transmitting power mode of the microcell.

9. The method according to claim 1, wherein
the state change of the microcell is deactivation of the microcell; and
configuring the transmitting power lower than the rated value in the normal active state for the microcell comprises gradually reducing the transmitting power of the microcell.

10. The method according to claim 2 or 9, further comprising: configuring power of an RS and/or a downlink channel on the basis of maximum transmitting power configured for the microcell;
the RS comprises a Cell Reference Signal (CRS), a Channel State Information Reference Signal (CSI-RS), a Primary Synchronization Signal (PSS), a Secondary Synchronization Signal (SSS) and a Positioning Reference Signal (PRS); and the downlink channel comprises a Physical Broadcast Channel (PBCH), a Physical Downlink Shared Channel (PDSCH), a Physical Downlink Control Channel (PDCCH) and an Enhanced Physical Downlink Control Channel (ePDCCH).

11. The method according to claim 2 or 9, further comprising:
notifying UE of transmitting power of an RS of a base station; and/or,
notifying the UE of a ratio of transmitting power of the RS of the base station to transmitting power of a data channel.

12. The method according to claim 11, wherein the notification comprises:
sending a corresponding notification to the UE every time when the base station regulates power;
or, notifying the UE of a power change rule when the base station sends a corresponding notification to the UE, the power change rule comprising information about a period and a step size.

13. A base station, comprising:
a detection unit, configured to notify a configuration unit to perform configuration when detecting a state change of a microcell; and
the configuration unit, configured to configure transmitting power lower than a rated value in a normal active state for the microcell when receiving the notification from the detection unit.

14. The base station according to claim 13, wherein the state change of the microcell is: activation of the microcell.

15. The base station according to claim 14, wherein
the configuration unit is configured to fixedly configure the transmitting power as a specific power value, the specific power value being lower than rated maximum transmitting power;
or, estimate path loss between User Equipment (UE) and the microcell based on received discovery signal (DS) strength measured and fed back by the UE and according to DS's transmitting power, and configure the transmitting power on the basis of the path loss;
or, estimate path loss between the UE and the microcell based on received DS strength measured and fed back by the UE and according to DS's transmitting power, set a power threshold value P_thre, configure the transmitting power on the basis of the path loss of the UE when the path loss of the UE does not exceed the P_thre, otherwise configure the transmitting power according to the P_thre;
or, when there are multiple UEs measuring and feeding back received DS strength, calculate path loss of each UE, set the power threshold value P_thre, configure the transmitting power according to path loss of UE having maximum fading when the path loss of the each UE does not exceed the P_thre, otherwise configure the transmitting power according to the P_thre.

16. The base station according to claim 14 or 15, wherein the configuration unit is configured to proportionally regulate power of a Reference Signal (RS) and/or a downlink channel on the basis of regulation of maximum transmitting power configured for the microcell.

17. The base station according to claim 14 or 15, wherein the configuration unit is configured to, after the microcell is activated, gradually increase the transmitting power until the transmitting power is increased to the rated value in the normal active state.

18. The base station according to claim 17, wherein
the configuration unit is configured to periodically increase the transmitting power according to a predetermined step size;
or, control a macro cell to increase the transmitting power of the microcell;
or, control the microcell to negotiate with a peripheral adjacent cell to increase the transmitting power;
or, control the microcell to regulate the power into normal transmitting power when UE is handed over to the microcell;
or, control a preset centralized control unit to increase the transmitting power of the microcell;
or, control a Self-Organized Network (SON) or an Operational Maintenance (OM) entity to increase the transmitting power of the microcell.

19. The base station according to claim 14, wherein the configuration unit is configured to preset multiple initial transmitting power modes, and when the initial transmitting power mode is configured as a normal mode, directly configure the microcell with transmitting power in the normal active state after the microcell is activated, and when the initial transmitting power mode is configured as a transmitting power gradual regulation mode, configure the transmitting power lower than the rated value in the normal active state for the microcell when the microcell is initially activated.

20. The base station according to claim 19, wherein the configuration unit is configured to control a macro cell to configure the initial transmitting power mode of the microcell;
or, control the microcell to negotiate with a peripheral adjacent cell to configure the initial transmitting power mode of the microcell;
or, control a preset centralized control unit to configure the initial transmitting power mode of the microcell;
or, control a SON or an OM entity to configure the initial transmitting power mode of the microcell.

21. The base station according to claim 13, wherein
the state change of the microcell is deactivation of the microcell; and
when configuring the transmitting power lower than the rated value in the normal active state for the microcell, the device is configured to gradually reduce the transmitting power of the microcell.

22. The base station according to claim 14 or 21, wherein the configuration unit is configured to configure power of an RS and/or a downlink channel on the basis of maximum transmitting power configured for the microcell;
the RS comprises a Cell Reference Signal (CRS), a Channel State Information Reference Signal (CSI-RS), a Primary Synchronization Signal (PSS), a Secondary Synchronization Signal (SSS) and a Positioning Reference Signal (PRS); and the downlink channel comprises a Physical Broadcast Channel (PBCH), a Physical Downlink Shared Channel (PDSCH), a Physical Downlink Control Channel (PDCCH) and an Enhanced Physical Downlink Control Channel (ePDCCH).

23. The base station according to claim 15 or 22, wherein the configuration unit is configured to notify UE of transmitting power of an RS of the base station; and/or,
notify the UE of a ratio of transmitting power of the RS of the base station to transmitting power of a data channel.

24. The base station according to claim 23, wherein the configuration unit is configured to send a corresponding notification to the UE every time when the power is regulated;
or, configured to further notify the UE of a power change rule when sending a corresponding notification to the UE, the power change rule comprising information about a period and a step size.
